# FASCICULE DE BREVET EUROPEEN

(11) **EP 4 271 656 B1**
(45) Date de publication et mention de la délivrance du brevet: **15.04.2026**
(21) Numéro de dépôt: 21844727.4
(22) Date de dépôt: 23.12.2021
(51) Int. Cl.: C02F 1/28, C02F 1/78

(54) **PROCÉDÉ DE TRAITEMENT DE L'EAU PAR ADSORPTION SUR CHARBON ACTIF COUPLÉ À UNE ADJONCTION D'OZONE, ET INSTALLATION POUR LA MISE EN OEUVRE DE CE PROCÉDÉ**
VERFAHREN ZUR WASSERAUFBEREITUNG DURCH ADSORPTION AN AKTIVKOHLE GEKOPPELT MIT ZUSATZ VON OZON UND ANLAGE ZUR DURCHFÜHRUNG DIESES VERFAHRENS
PROCESS FOR TREATMENT OF WATER BY ADSORPTION ON ACTIVE CARBON COUPLED WITH THE ADDITION OF OZONE, AND INSTALLATION FOR THE IMPLEMENTATION OF THIS PROCESS

(30) Priorité: 30.12.2020 FR 2014279
(43) Date de publication de la demande: 08.11.2023
(73) Titulaire: Veolia Water Solutions & Technologies Support, 94410 Saint-Maurice (FR)
(72) Inventeur: SAUVIGNET, Philippe, 35460 MAEN ROCH (FR); SABOURDY, Christophe, 35000 RENNES (FR)
(74) Mandataire: Cabinet Beau de Loménie
(86) Numéro de dépôt international: PCT/EP2021/087514
(87) Numéro de publication internationale: WO 2022/144304

(56) Documents cités:
- WO-A1-2019/224258
- CN-U- 205 061 675
- JP-A- H0 615 281
- US-A1- 2011 233 143
- US-A1- 2019 194 035
- STEVEN T. SUMMERFELT: "Ozonation and UV irradiation-an introduction and examples of current applications", AQUACULTURAL ENGENEERING, vol. 28, no. 1-2, 1 June 2003 (2003-06-01), Amsterdam NL, pages 21 - 36, XP055231752, ISSN: 0144-8609, DOI: 10.1016/S0144-8609(02)00069-9

## Description

### Domaine technique de l'invention

L'invention se rapporte au domaine technique du traitement de l'eau, et concerne notamment les procédés d'obtention d'eau potable et les procédés d'épuration des eaux usées. Plus particulièrement, l'invention concerne les procédés de traitement de l'eau pour éliminer la pollution organique dissoute par flux ascendant sur réacteur contenant du charbon actif couplé à l'adjonction d'ozone, ainsi que les installations permettant la mise en œuvre de tels procédés.

### Art antérieur

Il existe plusieurs types de procédés permettant d'éliminer la pollution organique dissoute au sein d'effluents aqueux. Les principaux procédés utilisés au sein des filières de production d'eau potable, pour le traitement des eaux usées municipales et pour le traitement des effluents résiduaires sont les procédés biologiques, les procédés de coagulation/floculation/sédimentation, les procédés d'oxydation, et les procédés d'adsorption.

Les procédés biologiques et les procédés de coagulation/floculation/sédimentation présentent l'inconvénient de produire des boues dont la gestion est de plus en plus problématique et coûteuse. Les procédés de coagulation/floculation/sédimentation ont de plus le désavantage de reposer sur l'approvisionnement et la consommation de produits chimiques (coagulants, agents de floculation) qui ne peuvent pas être extraits des boues produites pour permettre leur réutilisation en tête de ce même procédé. Les procédés d'oxydation ont quant à eux l'inconvénient de générer des sous-produits d'oxydation (oxydation partielle des composés organiques dissous n'allant pas jusqu'à leur minéralisation complète), ces sous-produits pouvant avoir une toxicité et/ou écotoxicité aussi importante que les composés organiques initiaux. De plus, certains de ces procédés d'oxydation reposent sur des mécanismes de catalyse homogène (comme par exemple la réaction de Fenton) entraînant de plus une production de boues.

La technique d'adsorption, notamment sur charbon actif, est une technique connue et couramment employée pour l'élimination des polluants organiques dissous (pesticides, résidus industriels, résidus de médicaments, ...) aussi bien au sein de filières de production d'eau potable que pour le traitement des eaux usées municipales et eaux résiduaires industrielles. Cette technique a toutefois l'inconvénient de produire une quantité importante de charbon actif usagé devant être extrait du réacteur et remplacé par une même quantité de charbon actif neuf.

On connaît également l'utilisation couplée d'une étape d'ozonation et d'une étape d'adsorption sur charbon actif, notamment dans des filières de potabilisation. L'intérêt d'une telle technique est non seulement lié au couplage du fort pouvoir oxydant de l'ozone aux grandes capacités d'adsorption du charbon actif, mais aussi à l'accélération de la décomposition de l'ozone en radicaux hydroxyles par le charbon actif. Les deux étapes sont conduites consécutivement, chacune dans un compartiment qui lui est dédié, c'est-à-dire que l'on procède d'abord à une étape de mise en contact de l'eau et de l'ozone, puis à une étape d'adsorption, pouvant être réalisée dans un filtre à charbon actif en grain. L'injection d'ozone est généralement réalisée par des diffuseurs poreux installés dans le réacteur d'ozonation pour un temps de contact dans le réacteur de 20 minutes environ. Mais le transfert d'ozone dans l'eau n'étant pas total, de l'ozone peut être présent dans le ciel gazeux dans le réacteur d'ozonation. Pour protéger la santé des exploitants, il est alors nécessaire de couvrir le réacteur d'ozonation et d'ajouter un destructeur d'ozone sur l'évent. De plus, pour réduire les molécules d'ozone résiduelles dans l'eau en sortie du réacteur d'ozonation, il faut ajouter un réducteur, tel que le bisulfite de sodium. Un autre inconvénient de cette technique est que la séparation physique des étapes d'ozonation et d'adsorption avec un temps de contact eau à traiter/ozone élevé crée des conditions favorables à la formation de sous-produits d'ozonation, tels que les bromates qui commencent à se former après 2 à 3 minutes de contact, mais aussi de sous-produits issus de la matière organique présente dans l'eau, telle que la N-nitrosodiméthylamine (NDMA). Ces sous-produits ne sont pas toujours adsorbables sur les particules de charbon actif et peuvent s'accumuler dans l'eau en sortie de l'étape d'adsorption. Il est donc important d'éviter leur formation. CN 205 061 675 U divulgue un procédé de traitement d'eau comprenant une étape d'injection d'ozone dans l'eau à traiter et une étape de traitement de l'eau ozonée dans un réacteur comprenant un lit fluidisé de particules de charbon actif.

### Objectifs de l'invention

Un objectif de la présente invention est de proposer une technique de traitement de l'eau n'entraînant pas la formation de sous-produits, ni de résidus solides.

Un autre objectif de la présente invention est de proposer une technique de traitement de l'eau qui n'entraîne pas la formation de bulles et/ou d'un nuage gazeux au-dessus du compartiment dans lequel se déroule l'adsorption, afin d'éviter ou tout au moins de limiter l'utilisation de produits chimiques tel qu'un réducteur. Une telle technique s'inscrit également dans la réduction des risques pour la santé des exploitants.

Un autre objectif de la présente invention est de proposer une technique de traitement de l'eau par adsorption sur charbon actif qui sature moins vite le charbon actif, voire qui permette sa régénération *in situ,* en vue de réduire les quantités d'adsorbant neuf à introduire en remplacement de l'adsorbant usagé.

Un autre objectif de la présente invention est de proposer une technique de traitement de l'eau qui consomme moins d'ozone comparativement aux procédés existants de type à oxydation avancée.

Un autre objectif de la présente invention est de proposer une technique qui permet d'atteindre ces objectifs tout en réduisant le temps de contact entre l'ozone et l'eau à traiter.

Un autre objectif de la présente invention est de proposer une technique de traitement de l'eau qui permette l'élimination des bactéries et virus présents dans l'eau à traiter, sans nécessiter d'étapes particulièrement mises en œuvre à cet effet.

### Résumé de l'invention

Ces objectifs, ainsi que d'autres qui apparaîtront par la suite, sont atteints grâce à l'invention.

Un premier objet selon l'invention concerne un procédé de traitement d'eau selon la revendication 1. En particulier, le procédé selon l'invention comprend :
- une étape d'injection d'ozone dans l'eau à traiter,
- une étape d'amenée de l'eau à traiter ozonée dans un réacteur comprenant un lit fluidisé de particules de charbon actif,
- une étape de mise en contact de l'eau à traiter ozonée avec les particules de charbon actif selon un flux de l'eau ascendant dans le réacteur,
- une étape d'évacuation de l'eau ainsi traitée,
dans lequel l'étape d'injection d'ozone dans l'eau à traiter est effectuée par un effet Venturi, et dans lequel l'étape d'injection est immédiatement suivie d'une étape de saturation de l'eau à traiter en ozone.

Ce procédé permet d'incorporer l'ozone dans l'eau puis de le dissoudre aux fins de supprimer les bulles tout en régénérant les particules de charbon actif présentes dans le réacteur. Grâce à ce procédé, et comme cela le sera démontré dans les exemples, il est possible de réduire la quantité d'ozone à utiliser ainsi que la quantité de charbon actif neuf à introduire en remplacement du charbon actif usagé, en comparaison avec les procédés existants, tout en maintenant de bonnes performances de traitement de l'eau.

Alternativement, les quantités d'ozone et de charbon actif peuvent être équivalentes à celles employées dans les procédés existants, et alors les performances de traitement de l'eau sont augmentées par rapport à celles obtenues par ces procédés existants.

Selon un mode de réalisation préféré, l'étape de saturation de l'eau en ozone est réalisée à l'aide d'un cône de saturation ou d'une colonne de dégazage.

L'utilisation d'un cône de saturation est avantageuse car c'est un dispositif simple, efficace et rapide à installer, et dont l'empreinte au sol peut être choisie en fonction de la configuration de l'installation et des performances souhaitées. Ainsi, les cônes de saturation peuvent aisément être intégrés dans des installations existantes comprenant un réacteur à lit fluidisé de particules de charbon actif, en vue de l'amélioration des performances de celui-ci ou de la réduction de la consommation de charbon actif neuf d'appoint. La saturation peut aussi être réalisée dans une colonne de dégazage.

Selon un mode de réalisation préféré, l'étape d'injection et l'étape de saturation de l'eau en ozone ont une durée globale inférieure à 1 minute, de préférence comprise entre 10 et 30 secondes.

Le procédé selon l'invention permet en effet d'améliorer les performances du traitement de l'eau ou de réduire la consommation en ozone et en charbon actif neuf sans ralentir le processus de traitement de l'eau. L'injection de l'ozone et la dissolution de celui-ci dans l'eau ne prend que quelques secondes, ce qui est particulièrement intéressant dans le cadre de la modification d'une installation existante.

Selon l'invention, les étapes d'injection de l'ozone et de saturation de l'eau en ozone sont mises en œuvre dans des moyens d'amenée de l'eau à traiter dans ledit réacteur. Alternativement, ces étapes peuvent être mises en œuvre dans une canalisation montée en dérivation sur des moyens d'amenée de l'eau à traiter dans ledit réacteur.

Ce choix de configurations permet astucieusement d'adapter au mieux le procédé aux installations existantes, en fonction de l'espace au sol disponible notamment.

Selon un mode de réalisation, les particules de charbon actif utilisées selon le procédé sont des agglomérats ayant une granulométrie comprise entre 300 µm et 1500 µm, de préférence entre 400 µm et 800 µm, et une densité réelle supérieure à 0,45.

Les agglomérats de charbon actif répondant à ces caractéristiques sont particulièrement avantageux, car ils permettent d'obtenir une expansion optimale du lit fluidisé de particules de charbon actif, ce qui améliore la capacité d'adsorption des polluants sur ceux-ci.

Selon un mode de réalisation, le réacteur à lit fluidisé selon le procédé est muni d'au moins un moyen de déflexion de l'eau disposé en partie haute. Un tel moyen de déflexion est destiné à réduire la vitesse du flux ascendant de l'eau pour aménager une zone de tranquillité au-dessus du lit de particules de charbon actif. Une telle zone de tranquillité est une zone de faible turbulences hydrodynamiques qui permet d'éviter que des particules de charbon actif, et notamment les particules les plus fines, soient emportées par le flux d'eau ascendant et ne s'échappent du réacteur, ce qui augmenterait la consommation en charbon actif neuf d'appoint. Ceci est particulièrement avantageux dans le cas où la coalescence de l'ozone à la surface des particules de charbon actif provoquerait l'émission de bulles et des pertes en charbon.

Selon une variante, le au moins un moyen de déflexion est constitué d'un jeu de lamelles inclinées par rapport à la verticale et parallèles entre elles, inclinées par rapport à la verticale d'un angle θ compris entre 50° et 60°, de préférence d'un angle θ voisin de 60°.

Selon un mode de réalisation, lorsqu'au moins un moyen de déflexion est présent dans le réacteur, le réacteur comprend en outre des moyens de récupération de l'eau disposés en aval de la zone de tranquillité, de tels moyens de récupération consistant de préférence en une goulotte de forme prismatique avec des faces latérales formant un angle α de 45° à 70° par rapport à l'horizontale et qui sont munies chacune d'un premier déversoir de fluide et d'un déflecteur faisant office de chicane comme moyen de déflexion.

Selon un mode de réalisation, la vitesse du flux de l'eau ascendant dans le réacteur à lit fluidisé est comprise entre 8 m/h et 50 m/h, préférentiellement comprise entre 20 m/h et 40 m/h.

Des bulles de gaz n'étant pas compatibles avec l'exploitation d'un réacteur à lit fluidisé car elles provoquent des perturbations hydrauliques, il est impératif qu'il n'y ait pas de bulles de gaz (en l'occurrence l'ozone) dans l'eau ozonée. Cela est atteint grâce à la dissolution de l'ozone dans l'eau dans le cône de saturation, préalablement à son entrée dans le réacteur à charbon actif. L'absence de bulles d'ozone dans l'eau réduit la turbulence du lit de particules de charbon actif. Cela a pour effet d'encore réduire la quantité de charbon actif enclin à s'échapper du réacteur.

Un autre objet selon l'invention concerne une installation pour le traitement de l'eau selon le procédé de l'invention.

En particulier, l'installation selon l'invention comprend :
- un réacteur à charbon actif comprenant un lit fluidisé de particules de charbon actif,
- des moyens d'amenée de l'eau à traiter dans le réacteur,
- des moyens d'évacuation de l'eau traitée,
et comprend en outre un moyen d'injection de l'ozone dans l'eau par un effet Venturi et un moyen de saturation de l'eau en ozone montés directement sur les moyens d'amenée de l'eau dans le réacteur, ou sur une canalisation montée en dérivation sur les moyens d'amenée de l'eau à traiter dans le réacteur.

Une telle installation présente l'avantage de ne pas augmenter significativement l'empreinte au sol des structures existantes, lesquelles peuvent facilement être modifiées pour intégrer les caractéristiques techniques supplémentaires selon l'invention.

Selon un mode de réalisation préféré, les particules de charbon actif dans l'installation sont des agglomérats ayant une granulométrie comprise entre 300 µm et 1500 µm, de préférence entre 400 µm et 800 µm, et une densité réelle supérieure à 0,45.

De tels agglomérats de charbon actif sont particulièrement adaptés à l'installation selon l'invention. Leurs propriétés particulières permettent d'obtenir une expansion du lit de charbon actif optimale, même lorsque des vitesses élevées sont appliquées au flux d'eau ascendant.

Selon un mode de réalisation particulier, le réacteur de l'installation est muni d'au moins un moyen de déflexion disposé en partie haute dudit réacteur.

De tels moyens permettent astucieusement de générer une zone de tranquillité dans la partie haute du réacteur, ce qui permet d'éviter la fuite des particules de charbon actif, notamment des plus fines.

Selon une variante, ledit au moins un moyen de déflexion est constitué d'un jeu de lamelles inclinées par rapport à la verticale et parallèles entre elles, inclinées par rapport à la verticale d'un angle θ compris entre 50° et 60°, de préférence d'un angle θ voisin de 60°.

Selon un mode de réalisation, et lorsque le réacteur comprend des moyens de déflexion, le réacteur comprend en outre des moyens de récupération de l'eau disposés en aval de la zone de tranquillité, les moyens de récupération consistant de préférence en une goulotte de forme prismatique avec des faces latérales formant un angle α de 45° à 70° par rapport à l'horizontale et qui sont munies chacune d'un premier déversoir de fluide et d'un déflecteur faisant office de chicane comme moyen de déflexion.

### Brève description des figures

[Fig.1] : la [Fig.1] présente une vue schématique de l'installation dans laquelle le système Venturi et le moyen de saturation de l'eau en ozone sont montés sur la canalisation d'amenée de l'eau au réacteur.
[Fig.2] : la [Fig.2] présente une vue schématique d'une installation selon l'invention dans laquelle le système Venturi et le moyen de saturation de l'eau en ozone sont installés sur une canalisation montée en dérivation d'une canalisation d'amenée de l'eau à traiter au réacteur.
[Fig.3] : la [Fig.3] est un diagramme montrant le pourcentage d'élimination de divers composés micropolluants dans un réacteur à lit de particules de charbon actif (10 g/m³ de particules de charbon actif) en présence ou non d'ozone. En blanc : absence d'ozone ; en noir : ozone à 2 g/m³. La liste des composés est donnée dans le tableau 2.

### Description détaillée de l'invention

L'invention vise à améliorer les procédés et les installations existants de traitement de l'eau. En particulier, l'invention vise à améliorer les techniques de traitement des eaux usées et/ou de l'eau potable. En effet, ces eaux sont particulièrement appropriées pour des traitements par ozonation et adsorption sur charbon actif. Ainsi, les techniques selon l'invention sont particulièrement efficaces pour le traitement de telles eaux.

Les procédés et les installations selon l'invention impliquent de façon originale l'association d'un moyen d'injection d'ozone par un effet venturi à un moyen de saturation de l'eau en ozone, juste en amont d'un réacteur dédié à l'adsorption des substances polluantes au travers d'un lit fluidisé de particules de charbon actif.

Au sens de l'invention, on entend par « substances polluantes » les matières organiques et chimiques qui nuisent à la qualité de l'eau, y compris celles qui sont présentes en concentrations très faibles (micropolluants).

Dans une première étape du procédé selon l'invention, de l'ozone est injecté dans l'eau à traiter. L'eau ozonée est ensuite conduite vers un réacteur comprenant un lit fluidisé de particules de charbon actif. Lors de son évolution selon un flux ascendant à travers le lit de particules de charbon actif, les substances polluantes de l'eau sont adsorbées sur les particules de charbon actif, puis l'eau traitée est évacuée du réacteur.

L'injection d'ozone est réalisée par l'aspiration générée par un effet Venturi, ce qui a pour avantage d'éviter toute fuite d'ozone dans l'atmosphère et permet de le mélanger avec l'eau. L'effet Venturi est un effet d'aspiration généré par un fluide en mouvement qui subit une dépression. Ainsi, par l'effet Venturi, l'eau à traiter subit une dépression qui va permettre l'aspiration de l'ozone dans l'eau. Grâce à cette technique, l'intégralité de l'ozone injecté est incorporée et mélangée dans l'eau à traiter. Il est donc possible d'utiliser des quantités réduites d'ozone par rapport aux techniques connues de l'art antérieur. De préférence, la quantité d'ozone à injecter dans l'eau est comprise entre 0,5 et 3,0 mg par litre d'eau à traiter. La génération d'un effet Venturi est réalisée par tout moyen connu de l'art. En particulier, elle est réalisée grâce à un système Venturi.

L'eau à traiter mélangée à l'ozone subit alors immédiatement une étape de saturation en ozone. Les molécules d'ozone sont alors dissoutes dans l'eau, évitant de façon significative la formation de bulles d'ozone dans l'eau. En effet, de telles bulles favorisent les turbulences dans le lit de particules de charbon actif et par conséquent leur sortie du réacteur. De plus, l'ozone sous forme de bulles est moins bien capturé sur la surface des particules de charbon actif. Or, le charbon actif est apte à réduire les molécules d'ozone. La diminution de la capacité à capturer l'ozone par les particules de charbon actif aurait donc pour conséquence de favoriser la formation d'un ciel gazeux préjudiciable au-dessus du réacteur. Enfin, le temps très court de quelques secondes pour l'injection de l'ozone et la saturation de l'eau à traiter en ozone présente également l'avantage d'éviter la formation de sous-produits par réaction de l'ozone avec les espèces contenues dans l'eau à traiter. La saturation de l'eau en ozone est réalisée par tout moyen connu. En particulier, elle est réalisée à l'aide d'un cône de saturation, qui permet d'obtenir une efficacité de transfert de l'ordre de 95 à 99%. Alternativement, il est possible de réaliser l'étape de saturation de l'eau en ozone grâce à une colonne de dégazage. Une telle colonne a l'avantage d'être simple à construire, mais elle présente une hauteur importante qui peut gêner sa mise en œuvre dans une exploitation existante.

Sans vouloir être liés à une quelconque théorie, on peut estimer que les améliorations obtenues grâce au procédé selon l'invention reposent en partie sur la capacité des molécules d'ozone dissoutes à réagir à la surface des particules de charbon actif pour créer de nouveaux groupes fonctionnels de surface. En effet, le charbon actif capture les molécules polluantes grâce à la présence de sites d'adsorption mais aussi grâce à la présence de groupes fonctionnels aptes à se lier aux substances polluantes, notamment organiques. L'ozone, de par son fort pouvoir oxydant, permet de créer de nouveaux groupes fonctionnels à la surface des particules de charbon actif. La capacité d'adsorption des particules de charbon actif est donc nettement améliorée, en particulier vis-à-vis des substances polluantes organiques comme les pesticides, les résidus médicamenteux et les substances organiques naturelles. Ainsi, pour une même quantité de charbon actif utilisée, les performances de traitement de l'eau sont nettement améliorées. Il a été ainsi observé une réduction du renouvellement du carbone jusqu'à 10 g/m³ d'eau à traiter, associé à une augmentation de 25% des performances d'adsorption des substances polluantes. Alternativement, le procédé selon l'invention permet de maintenir des performances à l'identique tout en réduisant significativement la quantité de charbon actif nécessaire au traitement de l'eau. De plus, la réaction de l'ozone à la surface du charbon actif permet avantageusement de réduire l'ozone, et d'ainsi éviter que de l'ozone soit retrouvé dans l'eau traitée et/ou dans un ciel gazeux au-dessus du réacteur.

Comme cela est démontré dans la partie expérimentale, le procédé selon l'invention permet de ne pas former de sous-produits tels que les bromates, et cela même en présence de fortes concentrations en bromures dans l'eau à traiter. De plus, le procédé selon l'invention permet l'abattement de la grande majorité des micropolluants à des taux supérieurs à 90%. Enfin, l'invention permet un meilleur assainissement de l'eau, notamment en réduisant les bactéries et les virus dans l'eau grâce à l'action de l'ozone.

Un autre avantage du procédé selon l'invention est que la durée totale des étapes d'injection d'ozone et de saturation de l'eau à traiter en ozone est très courte. Selon un mode de réalisation particulier, l'étape d'injection d'ozone et l'étape de saturation de l'eau en ozone ont une durée totale inférieure à 60 secondes, de préférence inférieure à 30 secondes, de façon plus préférée comprise entre 10 et 20 secondes. Il suffit alors de quelques secondes pour que l'eau à traiter soit saturée en ozone, et qu'ainsi les performances du traitement de l'eau soit nettement améliorée, ou bien, à performance égale, que les quantités de particules de charbon actif à renouveler soient significativement réduites. La réduction du temps de contact permet avantageusement d'éviter, ou tout au moins réduire, la formation de sous-produits.

Selon un mode de réalisation, les étapes d'injection d'ozone et de saturation de l'eau en ozone sont mises en œuvre au niveau des moyens d'amenée de la l'eau à traiter vers le réacteur, comme par exemple une canalisation. En effet, le procédé selon l'invention donne de meilleurs résultats lorsque ces deux étapes sont conduites à proximité du réacteur contenant le lit fluidisé de particules de charbon actif. Une augmentation de la durée d'amenée de l'eau saturée en ozone favorise l'apparition de sous-produits tels que les bromates.

Toutefois, le procédé selon l'invention permet également de réaliser ces étapes d'injection et de saturation à un autre niveau, ce qui permet d'adapter sa mise en œuvre à différentes configurations d'installations de traitement de l'eau.

Ainsi, selon un autre mode de réalisation, ces étapes sont réalisées au niveau d'une canalisation montée en dérivation des moyens d'amenée de l'eau à traiter vers le réacteur. Il est ainsi possible d'ajouter une étape préalable d'amenée de l'eau à traiter vers une canalisation montée en dérivation de la canalisation principale, où les étapes d'injection de l'ozone et de saturation de l'eau en ozone seront conduites. Une étape supplémentaire d'amenée de l'eau ainsi saturée en ozone vers la canalisation d'amenée principale pourra alors être prévue.

Une fois l'eau à traiter saturée en ozone, celle-ci est amenée dans un réacteur comprenant un lit fluidisé de particules de charbon actif. Cette étape est réalisée par les moyens d'amenée de l'eau à traiter dans le réacteur, comme par exemple une canalisation principale, éventuellement précédée par une étape d'amenée de l'eau saturée en ozone de la canalisation montée en dérivation vers les moyens d'amenée de l'eau à traiter dans le réacteur.

Dans le réacteur, l'eau saturée en ozone évolue selon un flux ascendant au travers du lit fluidisé de particules de charbon actif. Comme indiqué précédemment, l'ozone contenu dans l'eau va permettre la création de nouveaux groupes fonctionnels à la surface des particules de charbon actif. Les substances polluantes contenues dans l'eau à traiter vont ainsi être adsorbées à la fois par les sites d'adsorption des particules de charbon actif, et par les groupes fonctionnels créés en surface des particules de charbon actif. Dans le même temps, la réaction de l'ozone à la surface des particules de charbon actif va conduire à sa réduction, si bien qu'il n'y aura plus ou très peu d'ozone dans l'eau interstitielle.

Dans un mode de réalisation préféré, l'étape de mise en contact de l'eau à traiter saturée en ozone est réalisée sur des particules de charbon actif sous forme d'agglomérats. Les agglomérats de particules de charbon actif se distinguent notamment du charbon actif en poudre par leur granulométrie, leur surface spécifique et leur densité.

De façon préférée, les agglomérats de particules de charbon actif se présentent sous la forme de micrograins. Les micrograins de charbon actif mis en œuvre dans le procédé selon l'invention ont une granulométrie moyenne comprise entre 300 µm et 1500 µm, de préférence entre 400 µm et 800 µm, dont une proportion strictement inférieure à 5% de particules de taille inférieure à 400 µm. On notera que la granulométrie du charbon actif en poudre est nettement inférieure, généralement comprise entre 5 µm et 50 µm, en particulier entre 10 µm et 25 µm.

Selon un mode de réalisation, la densité des micrograins de charbon actif est supérieure à 0,45, de préférence supérieure à 0,5 (produit sec).

Selon un mode de réalisation, la concentration en particules de charbon actif dans le réacteur est comprise entre 100 g/L et 400 g/L, de préférence entre 150 g/L et 300 g/L.

La vitesse du flux ascendant d'eau appliquée dans le réacteur est ajustée en fonction de la granulométrie des particules de charbon actif dans le lit de particules. Il convient en effet de ne pas provoquer une expansion du lit de particules qui soit trop petite ou trop grande. Lorsque l'expansion du lit est trop petite, les particules de charbon ne sont pas complètement dissociées les unes des autres, ce qui réduit les performances d'adsorption du lit de particules. A l'inverse, lorsque l'expansion est trop grande, les particules de charbon actif risquent davantage d'être entraînées par le flux ascendant d'eau et de quitter le réacteur, augmentant la quantité de charbon actif neuf à ajouter pour compenser ces pertes. En pratique, la vitesse du flux ascendant peut ainsi être préférentiellement choisie pour former une zone d'expansion du lit de particules de charbon actif et une zone de transition au-dessus de celle-ci, la concentration en particules étant moins dense dans la zone de transition que dans la zone d'expansion.

Selon un mode de réalisation, la vitesse du flux ascendant d'eau dans le réacteur est comprise entre 8 m/h et 50 m/h, de préférence entre 20 m/h et 40 m/h.

Ce mode de réalisation convient en particulier lorsque les particules de charbon actif formant le lit du réacteur sont des micrograins tels que décrits précédemment.

Selon un mode de réalisation particulier, des moyens de déflexion de l'eau sont positionnés en partie haute du réacteur. De tels moyens de déflexion sont par exemple décrits dans la demande de brevet internationale publiée sous le numéro WO2019224258A1. Ils participent à la formation d'une zone de tranquillité dans la partie haute du réacteur.

Ceci permet d'utiliser des vitesses de flux ascendant de l'eau à traiter élevées tout en empêchant toute fuite en particules de charbon actif. Cela permet en outre de s'affranchir de l'utilisation de polymères de lestage même à des vitesses de flux ascendants de l'eau à traiter relativement élevées.

Préférentiellement, les moyens de déflexion sont constitués d'un jeu de lamelles inclinées par rapport à la verticale et parallèles entre elles. Préférentiellement, ces lamelles sont inclinées par rapport à la verticale d'un angle θ compris entre 50° et 60°. Avantageusement, les lamelles peuvent notamment être inclinées par rapport à la verticale d'un angle θ voisin de 60°.

Les lamelles peuvent être espacées l'une de l'autre d'une distance comprise entre 25 mm et 100 mm. Les lamelles peuvent notamment être espacées l'une de l'autre d'une distance comprise entre 36 mm et 42 mm. Cet espacement est particulièrement approprié pour des particules de média adsorbant, en particulier des grains ou des micrograins de charbon actif, de granulométrie comprise entre 300 µm et 1500 µm. La vitesse de l'eau diminue au sein des lamelles lors de son passage dans les moyens de déflexion, ce qui permet de créer la zone de tranquillité, zone où les particules peuvent décanter.

Selon un mode de réalisation particulier, lorsque les moyens de déflexion sont présents, le réacteur de l'installation comprend en outre des moyens de récupération de l'eau disposés en aval de la zone de tranquillité. De tels moyens peuvent par exemple consister en une goulotte de forme prismatique avec des faces latérales formant un angle α de 45° à 70° par rapport à l'horizontale et qui sont munies chacune d'un premier déversoir de fluide et d'un déflecteur faisant office de chicane comme moyen de déflexion. L'angle α peut notamment avoir une valeur voisine de 60°. Une telle goulotte a déjà été décrite dans la demande de brevet publiée sous le numéro FR2694209A1.

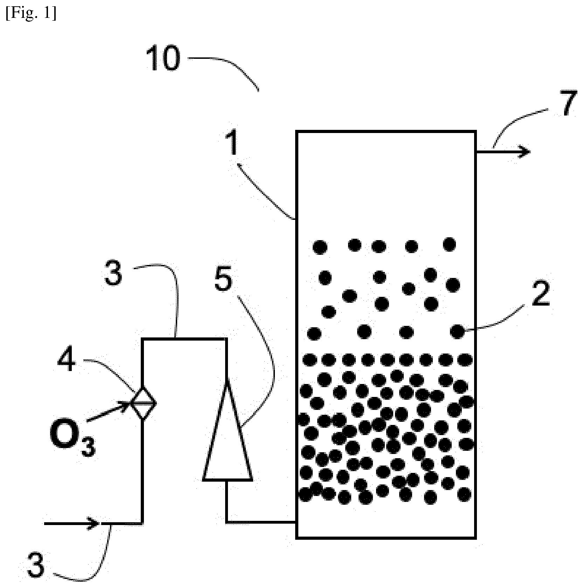

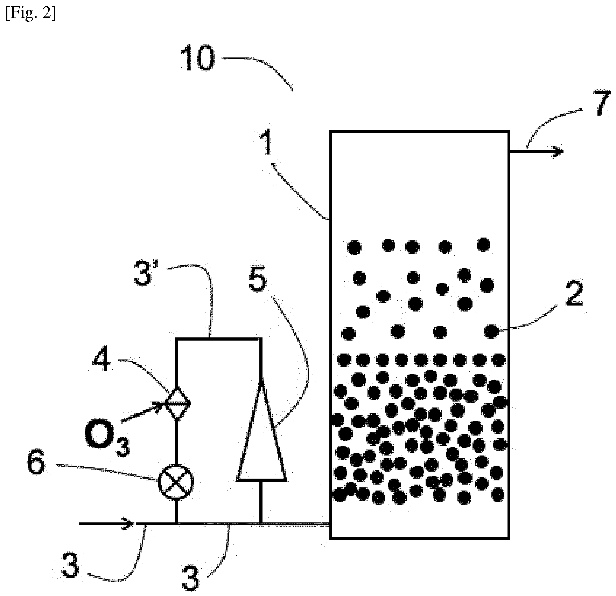

L'invention porte également sur une installation pour le traitement de l'eau, en particulier des eaux usées ou de l'eau potable, adaptée pour la mise en œuvre du procédé selon l'invention décrit précédemment. Cette installation est maintenant décrite en référence aux figures 1 et 2, qui sont utilisées aux seules fins d'illustration et ne constituent pas une limitation de la description détaillée donnée ci-après.

L'installation 10 selon l'invention comprend :
- un réacteur à charbon actif 1 comprenant un lit fluidisé de particules de charbon actif 2,
- des moyens 3 d'amenée de l'eau à traiter dans le réacteur 1,
- des moyens d'évacuation de l'eau traitée 7
- ainsi qu'un moyen d'injection de l'ozone dans l'eau à traiter par un effet Venturi, ici un système Venturi 4, et un moyen de saturation de l'eau en ozone, ici un cône de saturation 5, situés soit directement sur les moyens 3, soit sur un moyen 3' monté en dérivation des moyens 3.

Le réacteur 1 convenant au procédé selon l'invention comprend un lit fluidisé de particules de charbon actif 2. Le réacteur peut être de forme cylindrique ou carrée. Préférentiellement, le réacteur a une hauteur comprise entre 3 m et 10 m. Il est muni d'un moyen d'injection et de répartition de l'eau à traiter en partie basse du réacteur, afin de former un flux ascendant de l'eau au sein du réacteur.

Les particules de charbon actif constituant le lit 2 du réacteur 1 sont telles que décrites ci-avant. Le lit de particules de charbon actif dans le réacteur présente préférentiellement une hauteur comprise entre 1,5 m et 3 m au repos, et une hauteur en expansion comprise entre 2 m et 5 m.

Les moyens 3 d'amenée de l'eau et les moyens optionnels 3' de dérivation des moyens 3 d'amenée de l'eau peuvent être des canalisations. Lorsque des moyens 3' de dérivation sont mis en œuvre, les moyens 3 et 3' sont raccordés entre eux par des moyens connus, notamment des tés. Dans une variante de ce mode de réalisation particulier, des moyens 6 d'amenée de l'eau à traiter peuvent alors être prévus afin de conduire une partie de l'eau à traiter depuis les moyens 3 vers les moyens 3'. Il pourra notamment s'agir d'une pompe, de préférence une pompe accélératrice.

Un système Venturi 4 convenant au sens de l'invention peut être tout système Venturi connu. On pourra citer notamment les injecteurs Venturi commercialisés par la marque Stübbe ou équivalent.

Un cône de saturation au sens de l'invention peut être choisi parmi les cônes connus convenant à la saturation de l'eau en ozone. Il pourra en outre être choisi en fonction de différents critères, en particulier de l'espace occupé et du débit de l'eau à traiter. On connaît par exemple les cônes de saturation commercialisés par la marque Pentair ou la marque Linde-Gas ou équivalent. Bien entendu, d'autres moyens de saturation de l'eau en ozone pourront être mise en œuvre, comme par exemple une colonne de dégazage.

Selon un mode de réalisation particulier, le réacteur de l'installation selon l'invention est muni de moyens de déflexion (non représentés). Les moyens de déflexion convenant à l'installation selon l'invention sont ceux décrits ci-avant. Leur mise en œuvre dans l'installation permet avantageusement de ne pas devoir augmenter la hauteur du réacteur afin d'éviter les pertes en particules de charbon actif, ce qui permet d'obtenir une installation plus compacte. Avantageusement, les moyens de déflexion sont complétés par des moyens de récupération de l'eau tels que décrits précédemment.

Avantageusement, l'installation comprend des moyens 7 d'évacuation de l'eau traitée, par exemple une canalisation, afin de conduire l'eau traitée vers un réservoir de collecte ou vers un réacteur de traitement supplémentaire.

### Exemples

D'autres caractéristiques et avantages de l'invention ressortiront mieux des exemples qui suivent, donnés à titre illustratif et non limitatif.

### Exemple 1 : formation de groupes fonctionnels sur les particules de charbon actif

Des essais en laboratoire ont été conduits afin de valider les effets de l'ozonation sur l'activation de groupes fonctionnels en surface du charbon actif en poudre et en micrograins. Il est connu que la surface du charbon actif est chargée négativement lorsque le pH est supérieur au pH « point Zéro de Charge » pH_{PZC}, et qu'elle est chargée positivement lorsque le pH est inférieur au pH_{PZC}. Dans ce dernier cas, le charbon actif aura une grande affinité pour les composés anioniques.

Dans ces essais, le pH de l'eau contenant le charbon actif testé se situait entre 7,4 et 7,9. Le charbon actif était donc adapté pour les substances organiques chargées négativement. La quantité d'ozone injectée était de 2 g/m³ d'eau à traiter, ou bien nulle. Les particules de charbon actif étaient présentes à une concentration de 1,2 g/L. Les essais ont été conduits pendant 10 minutes.

L'identification des fonctions de surface ont été réalisées selon la méthode de Boehm. La valeur de l'indice d'iode a été obtenue selon la méthode ASTM D4607 - 94 (2006). Le pH_{PZC} (*Point ofZero Charge*) a été obtenu selon la méthode de Noh et Schwarz (1989).

Le tableau 1 présente les résultats obtenus.

**[Tableaux 1]**

| Dosage en Ozone g/m³ | Groupe I meq/g | Groupe II meq/g | Groupe III meq/g | Groupe IV meq/g | Total groupes meq/g | Indice d'iode mg/g | pH_{PZC} |
|---|---|---|---|---|---|---|---|
| 0 | 2,58 | 0,66 | 2,36 | 3,24 | 8,84 | 910 | 8,05 |
| 2,0 | 4,30 | 0 | 0 | 9,28 | 13,58 | 930 | 8,28 |

Le pH_{PZC} de l'eau contenant le charbon actif était de 8,05 sans ozone et de 8,28 après dix minutes d'ozonation (dégazage du CO₂ présent dans l'échantillon). L'ozonation *in situ* des particules de charbon actif a agi de façon directe sur la surface du matériau en créant ou en augmentant les groupes fonctionnels de surface. Ainsi, il a été observé une augmentation des groupements de surface.

Les propriétés acido-basiques de surface du charbon actif sont très importantes et semblent même prévaloir sur les caractéristiques de sa porosité dans le cas de l'adsorption de composés organiques en phase aqueuse. La chimie de surface du charbon résulte de l'existence d'hétéroatomes tels que l'oxygène, l'azote, l'hydrogène, le chlore, le soufre et le phosphore. Ces hétéroatomes forment des groupes organiques fonctionnels (fonctions pendantes), tels que les cétones (Groupe I), les éthers (Groupe II), les amines (Groupe III) et les phosphates (Groupe IV) situés sur les pourtours des cristallites de charbon. Leur teneur dépend de l'origine du charbon et de sa méthode d'activation, et détermine l'acidité ou la basicité du matériau. Leur présence a un effet non négligeable sur l'adsorption de molécules polaires.

Les résultats présentés ci-dessus montrent que le Groupe I passe de 2,58 meq/g à 4,30 meq/g, signifiant une nette augmentation des fonctions carboxyles forts, le Groupe III baisse de 2,36 meq/g à 0 meq/g, ce qui s'explique par une oxydation des groupes hydroxyles et phénols en carbonyles et carboxyles, et le Groupe IV passe de 3,24 meq/g à 9,28 meq/g. Ceci est particulièrement intéressant car ce sont les groupes I et IV qui sont impliqués dans l'adsorption des substances organiques, notamment par des interactions CO et OH (substance organique - fonctions de surface).

L'indice d'iode augmente et passe de 910 à 930 mg/g. Cette augmentation de l'indice d'iode et l'augmentation globale des fonctions de surface montrent l'optimisation des performances d'adsorption du charbon actif ayant reçu de l'ozone.

### Exemple 2 : élimination des substances polluantes in situ

Des réacteurs à lit fluidisé de micrograins de charbon actif existants ayant une concentration de 100 à 300 g/L de charbon actif ont été modifiés de manière à permettre l'injection d'ozone et la saturation de l'eau en ozone préalablement à son entrée dans le réacteur. Les eaux utilisées provenaient de deux usines produisant l'une de l'eau potable, l'autre des eaux usées en traitement tertiaire.

Pour chacune de ces usines, la quantité d'ozone injectée était comprise entre 1 g/m³ et 2,5 g/m³. Le taux de renouvellement en micrograins de charbon actif était compris entre 10 mg/L et 20 mg/L. La vitesse du flux d'eau ascendant dans le réacteur était comprise entre 20 m/h et 40 m/h. Le temps de contact de l'eau à traiter saturée en ozone dans le réacteur de fluidisation était d'environ 10 minutes.

La teneur en différents composés listés dans le tableau 2 ci-dessous a été mesurée afin d'évaluer le pourcentage d'élimination ce ceux-ci en fonction du traitement.

**[Tableaux2]**

| **N° composé** | **Nom** | **N° CAS** |
|---|---|---|
| 1 | Carbamazépine | 298-46-4 |
| 2 | Gabapentine | 60142-96-3 |
| 3 | Primidon | 125-33-7 |
| 4 | Clarithromycine | 81103-11-9 |
| 5 | Sulfaméthoxazole | 723-46-6 |
| 6 | Triméthoprime | 738-70-5 |
| 7 | Diclofénac | 15307-86-5 |
| 8 | Acide méfénamique | 61-68-7 |
| 9 | Venlafaxine | 93413-69-5 |
| 10 | Aténolol | 29122-68-7 |
| 11 | Acide aténolol | 56392-14-4 |
| 12 | Métoprolol | 51384-51-1 |
| 13 | Hydrochlorothiazide | 51384-51-1 |
| 14 | Valsartan | 137862-53-4 |
| 15 | Bézafibrate | 41859-67-0 |
| 16 | Benzotriazole | 95-14-7 |
| 17 | Methylchloroisothiazolone | 26172-55-4 |

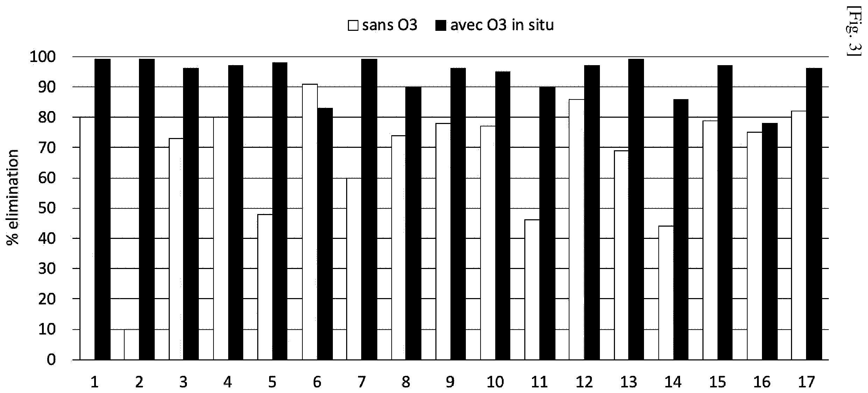

Les résultats obtenus sont présentés en [Fig.3].

Ils confirment que le procédé selon l'invention résulte en une nette amélioration de la qualité du traitement de l'eau. Un gain de l'ordre de 20% à 25% de la performance moyenne d'élimination des divers micropolluants est enregistré sur l'un des sites, portant le rendement d'élimination entre 85% et 92%. Sur l'autre site, où mis à part le benzotriazole (77.6%), toutes les autres molécules sont éliminées à plus de 80 %, avec des rendements atteignant les 99% pour la carbamazépine (composé n°1), le diclofénac (composé n°7), l'hydrochlorothiazide (composé n°13) et le sulfaméthoxazole (composé n°5, élimination à 98%).

### Exemple 3 : formation de sous-produits

Dans les techniques de l'art antérieur, les concentrations d'ozone utilisées se situent entre 8 et 10 g/m³. Il est connu que de telles concentrations et des temps de contact eau/ozone élevés favorisent l'apparition de sous-produits par oxydation des substances polluantes par l'ozone. En particulier, il est bien connu que l'ozonation d'une eau contenant des bromures conduit à la formation de bromates.

Des essais ont été conduits pour vérifier si les faibles doses d'ozone mises en œuvre grâce à l'invention entrainaient aussi une formation préjudiciable de sous-produits. Une eau usée tertiaire contenant entre environ 6,5 et 7 mg/L de bromures a été utilisée pour ces essais. La concentration d'ozone injectée était d'environ 2 g/m³, et la concentration en particules de charbon actif dans le réacteur à lit fluidisé était de 100 à 300 g/L. Le temps de contact dans le lit fluidisé était supérieur à 8 minutes. Les résultats ont été comparés à ceux obtenus en pratiquant l'ozonation dans un compartiment distinct, tel que cela est connu de l'art antérieur, avec un temps de contact de 3 minutes, et une injection d'ozone de 3 g/m³. Ils ont aussi été comparés à ceux obtenus dans le réacteur à lit fluidisé sans injection d'ozone.

Le tableau 3 présente les résultats des concentrations en bromates dans l'eau.

**[Tableaux3]**

| | Eau tertiaire ozonée | Eau tertiaire non ozonée traitée sur lit fluidisé de micrograins de charbon actif | Eau saturée en ozone puis traitée sur lit fluidisé de particules de charbon actif selon l'invention |
|---|---|---|---|
| Bromates (µg/L) | 137 | <10 | <10 |

Les concentrations d'ozone injectées inférieures à 3 g/m³ étaient trop faibles pour oxyder les substances polluantes, en particulier les micropolluants. Ceci a permis de ne pas produire de sous-produits dans l'eau.

De plus, grâce au procédé de l'invention, l'ozone était injecté presque directement dans le réacteur contenant le charbon actif. Cela a entrainé une réaction directe entre l'oxydant (ozone) et le réducteur (charbon actif), qui est beaucoup plus rapide que la réaction entre l'ozone et les substances polluantes telles que les matières organiques et les micropolluants. C'est la raison pour laquelle la réaction d'ozonation n'a pas modifié les micropolluants. De plus, l'eau interstitielle était exempte d'ozone résiduel.

### Exemple 4 : action bactéricide

Les bactéries coliformes ont été énumérées dans l'eau brute à traiter, puis dans l'eau en sortie du réacteur contenant le charbon actif. Il a été observé une réduction du nombre de coliformes totaux d'environ un à deux log. Ces résultats confirment l'action bactéricide de l'ozone.

L'ozone étant également connue pour son action virulicide, des résultats comparables sont attendus concernant les virus présents dans l'eau à traiter.

### Références

Joong S Noh, James A Schwarz, 1989. Estimation of the point of zero charge of simple oxides by mass titration. Journal of Colloid and Interface Science 130(1): 157-164. ISSN 0021-9797, https://doi.org/10.1016/0021-9797(89)90086-6.

## Revendications

1. Procédé de traitement d'eau comprenant :
- une étape d'injection d'ozone dans l'eau à traiter,
- une étape d'amenée de l'eau à traiter ozonée dans un réacteur comprenant un lit fluidisé de particules de charbon actif,
- une étape de mise en contact de l'eau à traiter ozonée avec les particules de charbon actif selon un flux de l'eau ascendant dans le réacteur,
- une étape d'évacuation de l'eau ainsi traitée,
**caractérisé en ce que**
- l'étape d'injection d'ozone dans l'eau à traiter est effectuée par un effet Venturi,
- l'étape d'injection est immédiatement suivie d'une étape de saturation en ozone de l'eau à traiter,
lesdites étapes d'injection de l'ozone et de saturation de l'eau en ozone étant mises en œuvre dans des moyens d'amenée de l'eau à traiter dans ledit réacteur, ou dans une canalisation montée en dérivation sur ces moyens d'amenée de l'eau à traiter dans ledit réacteur.

2. Procédé selon la revendication 1, **caractérisé en ce que** ladite étape de saturation est réalisée à l'aide d'un cône de saturation ou d'une colonne de dégazage.

3. Procédé selon la revendication 1 ou 2, **caractérisé en ce que** ladite étape d'injection et ladite étape de saturation de l'eau en ozone ont une durée globale inférieure à 1 minute, de préférence comprise entre 10 et 30 secondes.

4. Procédé selon l'une quelconque des revendications précédentes, **caractérisé en ce que** lesdites particules de charbon actif sont des agglomérats ayant une granulométrie comprise entre 300 et 1500 µm, de préférence entre 400 et 800 µm, et une densité réelle supérieure à 0,45.

5. Procédé selon l'une quelconque des revendications précédentes, **caractérisé en ce que** ledit réacteur est muni d'au moins un moyen de déflexion de l'eau disposé en partie haute, destiné à réduire la vitesse du flux ascendant de l'eau pour aménager une zone de tranquillité au-dessus du lit de particules de charbon actif.

6. Procédé selon la revendication 5, **caractérisé en ce que** ledit au moins un moyen de déflexion est constitué d'un jeu de lamelles inclinées par rapport à la verticale et parallèles entre elles, inclinées par rapport à la verticale d'un angle θ compris entre 50° et 60°, de préférence d'un angle θ voisin de 60°.

7. Procédé selon la revendication 5 ou 6, **caractérisé en ce que** le réacteur comprend en outre des moyens de récupération de l'eau disposés en aval de la zone de tranquillité, les moyens de récupération consistant de préférence en une goulotte de forme prismatique avec des faces latérales formant un angle α de 45° à 70° par rapport à l'horizontale et qui sont munies chacune d'un premier déversoir de fluide et d'un déflecteur faisant office de chicane comme moyen de déflexion.

8. Procédé selon l'une quelconque des revendications précédentes, **caractérisé en ce que** la vitesse du flux de l'eau ascendant est comprise entre 8 et 50 m/h, préférentiellement comprise entre 20 et 40 m/h.

9. Installation (10) pour la mise en œuvre du procédé selon l'une quelconque des revendications précédentes, comprenant :
- un réacteur à charbon actif (1) comprenant un lit fluidisé de particules de charbon actif (2)
- des moyens (3) d'amenée de l'eau à traiter dans le réacteur,
- des moyens (7) d'évacuation de l'eau traitée
**caractérisée en ce que** l'installation (10) comprend en outre un moyen (4) d'injection de l'ozone dans l'eau par un effet Venturi et un moyen (5) de saturation de l'eau en ozone montés directement sur les moyens (3) d'amenée de l'eau dans le réacteur, ou sur une canalisation (3') montée en dérivation sur les moyens (3) d'amenée de l'eau à traiter dans le réacteur.

10. Installation (10) selon la revendication 9, **caractérisée en ce que** lesdites particules de charbon actif (2) sont des agglomérats ayant une granulométrie comprise entre 300 et 1500 µm, de préférence entre 400 et 800 µm, et une densité réelle supérieure à 0,45.

11. Installation (10) selon la revendication 9 ou 10, **caractérisée en ce que** ledit réacteur (1) est muni d'au moins un moyen de déflexion disposé en partie haute dudit réacteur.

12. Installation (10) selon la revendication 11, **caractérisée en ce que** ledit au moins un moyen de déflexion est constitué d'un jeu de lamelles inclinées par rapport à la verticale et parallèles entre elles, inclinées par rapport à la verticale d'un angle θ compris entre 50° et 60°, de préférence d'un angle θ voisin de 60°.

13. Installation (10) selon la revendication 11 ou 12, **caractérisée en ce que** le réacteur comprend en outre des moyens de récupération de l'eau disposés en aval de la zone de tranquillité, les moyens de récupération consistant de préférence en une goulotte de forme prismatique avec des faces latérales formant un angle α de 45° à 70° par rapport à l'horizontale et qui sont munies chacune d'un premier déversoir de fluide et d'un déflecteur faisant office de chicane comme moyen de déflexion.

## Patentansprüche

1. Verfahren zur Wasseraufbereitung, umfassend:
- einen Schritt des Injizierens von Ozon in das aufzubereitende Wasser,
- einen Schritt des Zuführens des mit Ozon versetzten aufzubereitenden Wassers in einen Reaktor, umfassend eine Wirbelbett aus Aktivkohlepartikeln,
- einen Schritt des In-Kontakt-Bringens des mit Ozon versetzten aufzubereitenden Wassers mit den Aktivkohlepartikeln gemäß einem aufsteigenden Wasserfluss im Reaktor,
- einen Schritt des Ableitens des so aufbereiteten Wassers,
**dadurch gekennzeichnet, dass**
- der Schritt des Injizierens von Ozon in das aufzubereitende Wasser durch einen Venturi-Effekt erfolgt,
- dem Schritt des Injizierens unmittelbar ein Schritt des Sättigens des aufzubereitenden Wassers mit Ozon folgt,
wobei die Schritte des Injizierens des Ozons und des Sättigens des Wassers mit Ozon in Mitteln zur Zufuhr des aufzubereitenden Wassers in den Reaktor oder in einer Rohrleitung, die auf diesen Mitteln zur Zufuhr des aufzubereitenden Wassers in den Reaktor in einer Zweigleitung montiert ist, durchgeführt werden.

2. Verfahren nach Anspruch 1, **dadurch gekennzeichnet, dass** der Schritt des Sättigens mit Hilfe eines Sättigungskegels oder einer Entgasungssäule erfolgt.

3. Verfahren nach Anspruch 1 oder 2, **dadurch gekennzeichnet, dass** der Schritt des Injizierens und der Schritt des Sättigens des Wassers mit Ozon eine gesamte Dauer von weniger als 1 Minute, vorzugsweise im Bereich zwischen 10 und 30 Sekunden, aufweist.

4. Verfahren nach einem der vorhergehenden Ansprüche, **dadurch gekennzeichnet, dass** die Aktivkohlepartikel Agglomerate mit einer Granulometrie im Bereich zwischen 300 und 1500 µm, vorzugsweise zwischen 400 und 800 µm, und einer tatsächlichen Dichte von mehr als 0,45 sind.

5. Verfahren nach einem der vorhergehenden Ansprüche, **dadurch gekennzeichnet, dass** der Reaktor mit mindestens einem Mittel zur Ablenkung von Wasser, das im oberen Teil angeordnet ist, ausgestattet ist, das dazu ausgelegt ist, die Geschwindigkeit des aufsteigenden Wasserflusses zu reduzieren, um eine Ruhezone über dem Bett der Aktivkohlepartikel zu erzeugen.

6. Verfahren nach Anspruch 5, **dadurch gekennzeichnet, dass** das mindestens eine Mittel zur Ablenkung aus einem Satz von Lamellen besteht, die mit Bezug auf die Vertikale geneigt und parallel zueinander sind, die mit Bezug auf die Vertikale um einen Winkel θ im Bereich zwischen 50° und 60°, vorzugsweise einen Winkel θ nahe 60° geneigt sind.

7. Verfahren nach Anspruch 5 oder 6, **dadurch gekennzeichnet, dass** der Reaktor außerdem Mittel zur Rückgewinnung von Wasser umfasst, die nachgelagert von der Ruhezone angeordnet sind, wobei die Mittel zur Rückgewinnung vorzugsweise aus einer prismenförmigen Rutsche mit seitlichen Flächen besteht, die einen Winkel α von 45° bis 70° mit Bezug auf die Horizontale bilden, und die jeweils mit einem ersten Überlauf von Flüssigkeit und einem Deflektor ausgestattet sind, der als Ablenkblech als Mittel zur Ablenkung dient.

8. Verfahren nach einem der vorhergehenden Ansprüche, **dadurch gekennzeichnet, dass** die Geschwindigkeit des aufsteigenden Wasserflusses im Bereich zwischen 8 und 50 m/h, vorzugsweise im Bereich zwischen 20 und 40 m/h, liegt.

9. Anlage (10) zur Durchführung des Verfahrens nach einem der vorhergehenden Ansprüche, umfassend:
- einen Aktivkohlereaktor (1), umfassend ein Wirbelbett aus Aktivkohlepartikeln (2)
- Mittel (3) zur Zufuhr des aufzubereitenden Wassers in den Reaktor,
- Mittel (7) zum Ableiten des aufbereiteten Wassers,
**dadurch gekennzeichnet, dass** die Anlage (10) außerdem ein Mittel (4) zum Injizieren von Ozon in das Wasser durch einen Venturi-Effekt und ein Mittel (5) zur Sättigung des Wassers mit Ozon umfasst, die direkt auf den Mitteln (3) zur Zufuhr von Wasser in den Reaktor oder auf einer Rohrleitung (3'), die auf den Mitteln (3) zur Zufuhr des aufzubereitenden Wassers in den Reaktor in einer Zweigleitung montiert ist, montiert sind.

10. Anlage (10) nach Anspruch 9, **dadurch gekennzeichnet, dass** die Aktivkohlepartikel (2) Agglomerate mit einer Granulometrie im Bereich zwischen 300 und 1500 µm, vorzugsweise zwischen 400 und 800 µm, und einer tatsächlichen Dichte von mehr als 0,45 sind.

11. Anlage (10) nach Anspruch 9 oder 10, **dadurch gekennzeichnet, dass** der Reaktor (1) mit mindestens einem Mittel zur Ablenkung, das im oberen Teil des Reaktors angeordnet ist, ausgestattet ist.

12. Anlage (10) nach Anspruch 11, **dadurch gekennzeichnet, dass** das mindestens eine Mittel zur Ablenkung aus einem Satz von Lamellen besteht, die mit Bezug auf die Vertikale geneigt und parallel zueinander sind, die mit Bezug auf die Vertikale um einen Winkel θ im Bereich zwischen 50° und 60°, vorzugsweise einen Winkel θ nahe 60° geneigt sind.

13. Anlage (10) nach Anspruch 11 oder 12, **dadurch gekennzeichnet, dass** der Reaktor außerdem Mittel zur Rückgewinnung von Wasser umfasst, die nachgelagert von der Ruhezone angeordnet sind, wobei die Mittel zur Rückgewinnung vorzugsweise aus einer prismenförmigen Rutsche mit seitlichen Flächen bestehen, die einen Winkel α von 45° bis 70° mit Bezug auf die Horizontale bilden, und die jeweils mit einem ersten Überlauf von Flüssigkeit und einem Deflektor ausgestattet sind, der als Ablenkblech als Mittel zur Ablenkung dient.

## Claims

1. Water treatment method comprising:
- a step of injecting ozone into the water to be treated,
- a step of bringing the ozonated water to be treated into a reactor comprising a fluidised bed of activated carbon particles,
- a step of placing the ozonated water to be treated in contact with the activated carbon particles according to a flow of water ascending in the reactor,
- a step of discharging the water treated in this way,
**characterised in that**
- the step of injecting ozone into the water to be treated is carried out by a Venturi effect,
- the injection step is immediately followed by a step of ozone saturation of the water to be treated,
said steps of injecting ozone and of saturating the water with ozone are implemented in means for bringing the water to be treated into said reactor, or in a pipe mounted as a bypass on means for bringing the water to be treated into said reactor.

2. Method according to claim 1, **characterised in that** said saturation step is performed with the aid of a saturation cone or of a degassing column.

3. Method according to claim 1 or 2, **characterised in that** said step of injecting and said step of saturating the water with ozone have an overall duration less than 1 minute, preferably between 10 and 30 seconds.

4. Method according to any one of the preceding claims, **characterised in that** said activated carbon particles are agglomerates having a particle size between 300 and 1500 µm, preferably between 400 and 800 µm, and a true density greater than 0,45.

5. Method according to any one of the preceding claims, **characterised in that** said reactor is equipped with at least one means for deflecting the water disposed in the upper portion, intended to reduce the speed of the ascending flow of water to arrange a tranquil area above the bed of activated carbon particles.

6. Method according to claim 5, **characterised in that** said at least one deflection means consists of a set of blades inclined in relation to the vertical and mutually parallel, inclined in relation to the vertical by an angle θ between 50° and 60°, preferably by an angle θ close to 60°.

7. Method according to claim 5 or 6, **characterised in that** the reactor further comprises means for recovering the water disposed downstream of the tranquil area, the recovery means preferably consisting of a prism-shaped chute with side faces forming an angle α of 45° to 70° in relation to the horizontal and that are each equipped with a first fluid spout and with a deflector acting as a baffle as a deflection means.

8. Method according to any one of the preceding claims, **characterised in that** the speed of the flow of ascending water is between 8 and 50 m/h, preferably between 20 and 40 m/h.

9. Facility (10) for implementing the method according to any one of the preceding claims, comprising:
- an activated carbon reactor (1) comprising a fluidised bed of activated carbon particles (2)
- means (3) for bringing the water to be treated into the reactor,
- means (7) for discharging the treated water,
**characterised in that** the facility (10) further comprises a means (4) for injecting ozone into the water by a Venturi effect and a means (5) for saturating the water with ozone mounted directly on the means (3) for bringing the water into the reactor, or on a pipe (3') mounted as a bypass on the means (3) for bringing the water to be treated into the reactor.

10. Facility (10) according to claim 9, **characterised in that** said activated carbon particles (2) are agglomerates having a particle size between 300 and 1500 µm, preferably between 400 and 800 µm, and a true density greater than 0,45.

11. Facility (10) according to claim 9 or 10, **characterised in that** said reactor (1) is equipped with at least one deflection means disposed in the upper portion of said reactor.

12. Facility (10) according to claim 11, **characterised in that** said at least one deflection means consists of a set of blades inclined in relation to the vertical and mutually parallel, inclined in relation to the vertical by an angle θ between 50° and 60°, preferably by an angle θ close to 60°.

13. Facility (10) according to claim 11or 12, **characterised in that** the reactor further comprises means for recovering the water disposed downstream of the tranquil area, the recovery means preferably consisting of a prism-shaped chute with side faces forming an angle α of 45° to 70° in relation to the horizontal and that are each equipped with a first fluid spout and with a deflector acting as a baffle as a deflection means.
